Europäisches Patentamt

European Patent Office

Office européen des brevets

(11) Numéro de publication: **0 223 703**
A2

(12) # DEMANDE DE BREVET EUROPEEN

(21) Numéro de dépôt: **86402513.5**

(22) Date de dépôt: **12.11.86**

(51) Int. Cl.⁴: **A 23 L 1/308**, A 23 L 1/214, A 21 D 2/36

(30) Priorité: **13.11.85 FR 8516748**

(43) Date de publication de la demande: **27.05.87**
**Bulletin 87/22**

(84) Etats contractants désignés: **AT BE CH DE ES FR GB GR IT LI LU NL SE**

(71) Demandeur: **Groupement d'Intérêt Economique dit: SUCRE RECHERCHES ET DEVELOPPEMENTS, 27-29, Rue Chateaubriand, F-75383 Paris Cédex 08 (FR)**

(72) Inventeur: **Michel, Florence, 1, rue des Marsauderies, F-44300 Nantes (FR)**
Inventeur: **Thibault, Jean-François, 2, rue de la Rotonde, F-44700 Orvault (FR)**
Inventeur: **Pruvost, Gilles, 4, rue des Fontaines Canly, F-60680 Grandfresnoy (FR)**

(74) Mandataire: **Bourgognon, Jean-Marie et al, Cabinet Flechner 22, Avenue de Friedland, F-75008 Paris (FR)**

(54) Procédé de préparation de fibres alimentaires, fibres obtenues et produits alimentaires en contenant.

(57) Il consiste à immerger des pulpes dans de l'éthanol à au moins 75% immédiatement après leur surpressage puis, immédiatement ou non, à les broyer en milieu éthanolique à au moins 75% jusqu'à obtention de fibres ayant une granulométrie comprise entre 1 mm et 50 microns, puis à laver les fibres par de l'éthanol à au moins 75% jusqu'à ce que le filtrat soit incolore, puis à sécher les fibres lavées. Industrie agroalimentaire.

EP 0 223 703 A2

<u>Procédé de préparation de fibres alimentaires,</u>
<u>fibres obtenues et produits alimentaires en contenant.</u>

La présente invention se rapporte d'une manière générale aux procédés de préparation de fibres alimentaires, aux fibres alimentaires obtenues et aux produits alimentaires en contenant.

Les pulpes de betteraves sont un sous-produit de l'industrie sucrière. Le procédé industriel de traitement des betteraves consiste à laver les betteraves pour éliminer le maximum de matières étrangères (terre, feuilles, ...), à les découper en cossettes et à en extraire le sucre par un procédé de diffusion. L'eau qui circule à travers les cossettes se charge progressivement en sucre. A la sortie du diffuseur, les cossettes ont perdu la plus grande partie de leur sucre ainsi que des impuretés solubles dans l'eau. Elles prennent alors la dénomination de pulpes. On les presse ensuite. Pour obtenir une teneur en matières sèches suffisamment basse, on les soumet notamment à un surpressage qui donne des pulpes ayant une teneur en matières sèches comprise entre 18 et 32 % en poids.

Un regain d'intérêt pour les fibres alimentaires a incité l'industrie agro-alimentaire et l'industrie pharmaceutique à proposer des produits enrichis en fibres destinés à être incorporés dans des produits à usage alimentaire ou médical. Les fibres alimentaires sont constituées principalement de cellulose, d'hémicelluloses, de substances pectiques et de lignine. On estime que la carence en fibres alimentaires serait à l'origine de maladies coliques (constipation, diverticulose) ou métaboliques (diabète, hypercholestérolémie, lithiase biliaire, obésité). Le pouvoir d'absorption d'eau des fibres augmente l'hydratation des selles, ce qui facilite le transit intestinal. Les régimes riches en fibres augmentent les pertes caloriques fécales et permettent d'obtenir un encombrement intestinal plus important pour un ingestat calorique moindre.

C'est pourquoi on propose, au brevet des Etats-Unis d'Amérique 4 451 489, un procédé de production d'un agent donnant du corps non calorique, à partir des pulpes de betteraves. Le procédé consiste à placer les cossettes pelées dans une solution de sulfite, de bisulfite ou de métabisulfite pour empêcher le noircissement de la pulpe, à laver les cossettes ainsi stabilisées pour en enlever tous les hydrates de carbone solubles, à mettre les cossettes ainsi lavées à l'eau en contact avec une solution alcoolique pour en enlever tous les constituants donnant une coloration et un goût, et à enlever l'eau et l'alcool des cossettes, afin d'obtenir un produit décoloré et inodore. L'expérience montre cependant que ce procédé, relativement compliqué par le nombre des stades mis en oeuvre et par la nature des produits chimiques engagés, donne un produit inapte à la consommation, parce qu'il a une odeur due au $SO_2$ provenant du traitement par le sulfite au premier stade.

On s'est efforcé de pallier cet inconvénient en utilisant comme agent oxydant, non plus un sulfite, mais de l'acide ascorbique ou de l'acide citrique. Les pulpes, obtenues après lavage alcoolique, séchage et broyage, présentent cependant alors une coloration grise, peu appréciée de l'utilisateur.

L'invention remédie à ces inconvénients par un procédé beaucoup plus simple que les procédés antérieurs, qui donne des fibres qui, tout en étant inodores et d'une coloration qui n'est pas grise, est d'une mise en oeuvre bien plus simple que les procédés antérieurs, ce procédé s'appliquant d'ailleurs d'une manière générale aux parties comestibles des végétaux se trouvant en un état les rendant sensibles aux phénomènes de dégradations enzymatiques, notamment à l'oxydation, au pourrissement.

Le procédé de préparation de fibres alimentaires suivant l'invention consiste à immerger les parties comestibles des végétaux dans de l'éthanol à au moins 75 % immédiatement après qu'elles ont été mises en un état les rendant sensibles aux phénomènes de dégradations enzymatiques, puis, immédiatement ou non, à les broyer en milieu éthanolique à au moins 75 %, jusqu'à obtention de fibres ayant une granulométrie comprise entre 1 mm et 50 microns, puis à laver les fibres broyées par de l'éthanol à au moins 75 %, jusqu'à ce que le filtrat soit incolore, puis à sécher les fibres lavées.

On a en effet constaté, d'une manière surprenante, que ces simples traitements éthanoliques suffisaient pour obtenir les fibres non colorées et inodores requises, ayant d'ailleurs même des propriétés supérieures aux fibres classiques, pourvu que les parties comestibles et, de préférence, les pulpes de betterave, soient immergées dans de l'éthanol immédiatement après le traitement les rendant sensibles et notamment le surpressage et pourvu qu'elles soient traitées, et donc notamment broyées, en restant en milieu éthanolique.

Alors que, dans les procédés antérieurs relatifs aux pulpes de betteraves, on s'efforçait de supprimer les odeurs et la coloration par un traitement chimique, suivant l'invention, on empêche les pulpes de se charger en produit donnant des odeurs ou des goûts désagréables et de la coloration, par un traitement immédiat à l'éthanol. Par traitement immédiat, on entend que l'on immerge les pulpes dans de l'éthanol moins de quelques heures après leur surpressage, par exemple moins de 4 heures. On obtient les résultats les meilleurs en réduisant le plus possible le délai entre la fin du surpressage et l'immersion des pulpes dans de l'éthanol. C'est ainsi que, de préférence, ce délai sera inférieur à une demi-heure et, mieux encore, inférieur à 5 minutes. En observant ces délais, on bloque les processus de brunissement enzymatique que l'on n'a plus ensuite à combattre par voie chimique avec les inconvénients que cela emporte.

Par partie comestible des végétaux, se trouvant en un état les rendant sensibles aux phénomènes de dégradation enzymatique, on entend la racine de betterave sucrière, de betterave semi-fourragère, de betterave fourragère, après surpressage ou découpage ou autre traitement de fragmentation ou de stockage prolongé, d'autres racines, telles que la carotte, le radis, la rave, la blette, ayant subi les mêmes traitements, des bulbes, notamment l'oignon découpé ou stocké de manière prolongée, des légumineuses, comme le pois protéagineux, le haricot, des feuilles, comme le poireau, la salade, le lupin, les épinards eux aussi rendus sensibles aux dégradations par fragmentation ou autres.

On décrira ci-dessous le procédé pour des pulpes de betterave, étant entendu que le procédé s'applique de la même façon à toute autre partie comestible des végétaux se trouvant à l'état sensible.

On immerge en général les pulpes dans 1,2 à 1,8 litre d'éthanol par kg de pulpe, étant entendu que la quantité d'éthanol peut être augmentée à volonté.

L'alcool utilisé ne doit contenir ni pigment, ni goût, être limpide et incolore, ne pas contenir de dérivés sulfurés et ne pas avoir une teneur en eau supérieure à 10 % en poids. Cette qualité d'alcool correspond à un alcool Rectifié Extra Neutre. (REN degré alcoolique supérieur ou égal à 95).

Dès lors que les pulpes ont été immergées en milieu éthanolique, on peut les broyer immédiatement ou les conserver à volonté avant de les broyer pour leur donner une granulométrie comprise entre 1 mm et 50 microns, étant entendu que, là encore, le broyage doit s'effectuer en milieu éthanolique à au moins 75 % sous peine de reperdre les avantages obtenus par l'immersion immédiate des pulpes dans de l'éthanol. Le broyage doit s'effectuer, de préférence, à l'aide de broyeurs à couteaux et non par pilonnage pour conserver le mieux possible les caractéristiques physiques des fibres. Le mieux est de terminer le broyage dans un broyeur à meule, pour bien conserver la structure fibreuse.

Le troisième stade du procédé suivant l'invention consiste à laver les fibres par de l'éthanol à au moins 75 %, jusqu'à ce que le filtrat soit incolore. Il faut, en laboratoire, de 1,5 à 3 litres d'éthanol pour laver 1 kg de pulpes broyées. Au stade industriel, on peut faire appel à un système de lavage, par exemple à contre-courant, afin de minimiser les quantités d'éthanol à recycler. On constate que le lavage est terminé lorsque le dernier alcool de lavage est incolore, alors qu'il était auparavant jaune clair.

Les fibres obtenues sont plus blanches, lorsque l'on effectue l'immersion et le lavage dans de l'éthanol ayant une température supérieure à 50°C, par exemple comprise entre 55°C et 65°C.

Le stade suivant du procédé suivant l'invention consiste à sécher, par exemple pendant au moins une nuit à l'étuve à 60°C et pendant quelques jours notamment de 2 à 10 jours, à 35°C.

Avec les pulpes de betterave, on obtient des fibres alimentaires ayant des teneurs pondérales en hémicelluloses comprises entre 25 et 33 %, en cellulose comprises entre 20 et 27 %, en acides uroniques comprises entre 20 et 25 %, en protéines comprises entre 7 et 12 %, en lignine comprises entre 1 et 6 %, en matières minérales (cendres) inférieures ou égales à 7,5 et en saccharose inférieures ou égales à 0,5 %, le solde étant constitué par des matières grasses et par des impuretés de lavage et ayant des capacités de rétention d'eau en solutions sucrée à 10 % et salée à 1 % supérieures à 20 g/g.

Avec la carotte, on obtient des fibres alimentaires ayant des teneurs pondérales en hémicelluloses comprises entre 16 et 8 %, en cellulose comprises entre 23 et 16 %, en acides uroniques comprises entre 28 et 35 %, en protéines comprises entre 5,5 et 4 %, en lignine comprises entre 0,5 et 2 %, en matières minérales (cendres) inférieures ou égales à 6,5, le solde étant constitué par des matières grasses et par des impuretés de lavage et ayant des capacités de rétention d'eau en solution aqueuse sucrée à 10 % supérieure à 30 g/g et salée (NaCl) à 1 % supérieure à 25 g/g.

Avec l'oignon, on obtient des fibres alimentaires ayant des teneurs pondérales en cellulose comprises entre 17 et 22 %, en acides uroniques comprises entre 7 et 4 %, en protéines comprises entre 8 et 11 %, en lignine comprises entre 1,5 et 2,5 %, en matières minérales (cendres) inférieures ou égales à 4,5, le solde étant constitué par des matières grasses et par des impuretés de lavage et ayant des capacités de rétention d'eau supérieure à 35 g/g.

Les fibres obtenues se caractérisent non seulement par leur absence de goût et d'odeur étrangère, mais également par le fait qu'elles ont une rétention d'eau bien supérieure aux fibres connues actuellement. Cette rétention d'eau contribue à son tour à en réduire le pouvoir calorique qui est inférieur à 3 MegaJ/kg, tel que déterminé au calorimètre.

On donne ci-dessous les protocoles opératoires effectués pour déterminer les caractéristiques physiques et chimiques des fibres.

Dosage d'eau.

La teneur en eau correspond à la perte de poids enregistrée après un séjour des échantillons de 2 heures à 130°C.

Dosage des cendres.

Le dosage des cendres est réalisé par la pesée du résidu d'incinération des échantillons pendant une nuit à 550°C et 1 heure à 750°C.

Dosage des protéines.

La teneur en protéines des échantillons est estimée en multipliant la teneur en azote mesurée selon la méthode de Kjeldahl par un facteur de 5,7.

Dosage des acides uroniques.

Les échantillons sont hydrolysés en milieu acide sulfurique concentré selon la méthode décrite par Ahmed A.R. et Labavitch J.M., 1977. A simplified method for accurate determination of cell wall uronide content. J. Food Biochem., 1, pages 361-365. Les teneurs en acides uroniques libérés sont déterminées par dosage manuel au métahydroxydiphényle
(Blumenkrantz N. et Asboe-Hansen G., 1973, New Method
for quantitative determination of uronic acids.
Anal. Biochem., 54, pages 484-489) ; les résultats
sont exprimés en acides galacturoniques.

Mode opératoire.

20 mg d'échantillon sont "solubilisés" dans
8 ml d'acide sulfurique concentré et maintenus sous
agitation dans un bain de glace. 4 ml d'eau distillée
sont progressivement ajoutés avant de transférer les
solutions dans des fioles de 100 ml, dont le volume
est ajusté par de l'eau distillée. 0,5 ml sont prélevés dans des tubes à essais placés dans un bain de
glace, puis 3 ml d'une solution d'acide sulfurique
concentré contenant du tétraborate de sodium (0,0125M)
sont versés. Après agitation, les tubes sont mis au
bain-marie bouillant pendant 10 minutes. Puis, 50
µlitres d'une solution de métahydroxydiphényle 0,15 %
en soude 0,125N sont ajoutés. Après 10 minutes de
réaction, la densité optique est lue à 520 nm. Les
teneurs des échantillons sont calculées par rapport
à une gamme étalon en acides galacturoniques traitée
dans les mêmes conditions.

Dosage du saccharose résiduel.

Les oligosides sont extraits par de l'éthanol
80 % et les extraits éthanoliques sont purifiés par
défécation des protéines (Cerning-Beroard J., et
Filiatre A., 1976. A comparison of the carbohydrate
composition of legume seeds. Cereal Chem., 53, pages
968-978). Le saccharose est alors dosé spécifiquement
par chromatographie liquide sous haute pression
(Quemener B. et Mercier C., 1980. Dosage rapide des
glucides éthanolo-solubles des graines de légumineuses par chromatographie liquide sous haute pression.
Lebensm. Wiss. u. Technol., 13, pages 7-12).

Mode opératoire.

2,5 g de matériel sont extraits à reflux par 40 ml d'éthanol 80 % (v/v) bouillant pendant 30 minutes. La suspension est centrifugée, et le culot est extrait à nouveau dans les mêmes conditions. Après centrifugation, le culot est redispersé dans 40 ml d'éthanol 80 %, cette opération est renouvelée une fois. L'extrait éthanolique concentré sous vide est transféré quantitativement dans une fiole de 25 ml contenant 0,5 ml d'une solution de sel de Carrez I (acétate de zinc à 23,8 % dans l'acide acétique 3 %). 0,5 ml d'une solution de sel de Carrez II (fericyanure de potassium à 10,6 % dans l'eau) sont ajoutés avant de compléter la fiole au trait de jauge par de l'eau distillée. Le précipité formé est éliminé sur papier filtre ; le filtrat est directement injecté (30 micro-litres) sur la colonne de chromatographie (25 cm x 0,46) ; la phase utilisée est du Sphérisorb NH$_2$ (5 microns, Soparès), et le solvant eau 20 : acétonitrile 80.

Les résultats sont exprimés par rapport à un étalonnage en saccharose.

Dosage des hémicelluloses, cellulose, lignine par la méthode de Van Soest.

Les constituants cytoplasmiques des échantillons sont solubilisés par une solution neutre de lauryl sulfate de sodium (Van Soest P.J. et Wine R.H., 1967. Use of detergents in the analysis of fibrous feeds. IV - Determination of plant cell wall constituents. J.A.O.A.C.50, pages 50-55). Le résidu ou NDF (Neutral Detergent Fiber), correspondant aux parois des cellules végétales, est repris par une solution d'acide sulfurique 1N en présence de bromure de cétyltriméthylammonium (Van Soest P.J., 1963. Use of detergents in the analysis of fibrous feeds. II - A rapid Method for the determination of fiber and lignin. J.A.O.A.C.46, pages 829-835). Le nouveau résidu ou ADF (Acid Detergent Fiber), correspondant à la lignocellulose, est traité à l'acide sulfurique 72 %, hydrolysant la cellulose (Van Soest P.J., 1963. Use of detergents in the analysis of fibrous feeds. A rapid Method for the determination of fiber and lignin. J. Adac, 46, pages 829-835). Ce dernier résidu correspond à la lignine après estimation des cendres.

<u>Mode opératoire.</u>

Les extractions sont réalisées à l'aide d'un Fibertec. Un poids P d'échantillon (environ 1 g sec) est traité à ébullition durant 1 heure sous reflux par 50 ml d'une solution de détergent neutre de composition suivante :

| | |
|---|---|
| Lauryl sulfate de sodium | 30,00 g |
| Ethylène diamine tétraacétate disodique | 18,61 g |
| Borate de sodium décahydrate | 6,81 g |
| Phosphate disodique anhydre | 4,56 g |
| 2-éthoxyéthanol (éthylèneglycolmono-éthyléther) | 10 ml |
| q.s.p. | 1000 ml. |

L'échantillon est ensuite rincé plusieurs fois à l'eau, puis à l'acétone sur un verre fritté No 2, préalablement taré. Les résidus NDF sont déshydratés durant une nuit à 100°C avant d'être pesés (P1). Ils sont à nouveau extraits à chaud sous reflux par 50 ml d'une solution à 20 % de bromure de cétyltriméthylammonium dans l'acide sulfurique 1N durant 1 heure. L'échantillon est alors rincé plusieurs fois à l'eau, puis à l'acétone sur verre fritté No 2. Les résidus ADF, déshydratés durant une nuit à 100°C, sont pesés (P2). Ils sont ensuite traités à l'acide sulfurique 72 % pendant 3 heures, rincés à l'eau chaude puis à l'acétone. Après déshydratation à 100°C durant une nuit, ils sont pesés (P3). Ces derniers résidus subissent une incinération durant 3 heures à 550°C avant une dernière pesée (P4).

Les calculs suivants permettent de déterminer :

NDF = P1/P

ADF = P2/P

Hémicelluloses = (P1 - P2)/P

Cellulose     = (P2 - P3)/P

Lignine       = (P3 - P4)/P.

Masse volumique apparente et tassée.

La masse volumique apparente et tassée des échantillons est déterminée à l'aide du combiné d'analyses pour poudres Hosokawa Micrometrics.

Mode opératoire.

Sous l'effet des vibrations du tamis de 24 mesh dans lequel il est placé, l'échantillon se déverse jusqu'à déborder dans un récipient taré de 100 ml exactement placé au-dessous. Le monticule de poudre au-dessus du récipient est alors arasé. La pesée donne la masse volumique apparente (A). Sur le récipient préalablement rempli et nivelé, est placée une surhausse dans laquelle un supplément d'échantillons est ajouté. Le tout est placé dans un dispositif automatique de tassement : l'échantillon est tassé par des secousses successives appliquées au bas du récipient durant 216 secondes à une fréquence de 50 Hz. Ensuite, la surhausse est enlevée, et le récipient est à nouveau arasé. Une seconde pesée donne la masse volumique tassée (T). Le taux de compression (C) est donné par la formule suivante :

$$C = 100(T - A)/T$$

Chaque série de mesures est répétée trois fois.

Capacité de rétention d'eau.

La capacité de rétention d'eau est définie comme étant le poids d'eau retenu par gramme de matériel sec après centrifugation des échantillons placés en équilibre en présence d'un excès d'eau (Mc Connell A.A., Eastwood M.A., et Mitchell W.D., 1974. Physical characteristics of vegetable foodstuffs that could influence bowel function. J. Sci. Food. Agric., 25, pages 1457-1464).

Mode opératoire.

Environ 0,45 g sec d'échantillon pesé dans des tubes de centrifugation tarés sont maintenus sous agitation dans 25 ml de solution à 25°C durant 16 heures. Après une centrifugation de 1 heure à 1400 g et 20°C, le surnageant est éliminé à l'aide d'une pipette ; et les tubes sont à nouveau pesés. Le poids d'eau retenu est calculé par gramme de matériel sec initial. Un dosage d'eau est réalisé sur le culot obtenu par centrifugation, les acides galacturoniques et les oses neutres contenus dans le surnageant dont le pH est mesuré sont estimés par dosage automatique au technicon (Thibault J.F., 1979. Automatisation du dosage des substances pectiques par la méthode au métahydroxydiphényle, Lebenm. Wiss- u. Technol. 12, pages 247-251 ; Tollier M.T. et Robin J.P., 1979. Adaptation de la méthode à l'orcinol sulfurique au dosage automatique des glucides neutres totaux : conditions d'application aux extraits d'origine végétale. Ann. Technol. Agric., 28, pages 1-15).

La capacité de rétention d'eau des échantillons est testée en eau distillée, ainsi qu'en milieu acide (le pH de la suspension est ajusté à 3,5 par de l'acide chlorhydrique 0,1N) à 25°C et à 4°C. Le comportement des échantillons est aussi étudié dans différentes solutions à 25°C : solution à 1 et 2 % de chlorure de sodium ou de chlorure de calcium, eau "courante", solution à 10 et 20 % de saccharose.

A titre comparatif, ces mêmes essais sont pratiqués sur du son de blé brut, tamisé sur 0,5 mm pour éliminer une partie de la farine résiduelle, et sur une fibre de betterave commercialisée (Fibrex).

La capacité de rétention d'eau des échantillons sous forme acide et sous forme saline (sodium et calcium) est aussi testée en présence d'eau distillée à 25°C ; les résultats sont alors rapportés au poids initial d'échantillon sec exprimé sous forme acide.

Les fibres obtenues peuvent être mises sous forme de comprimés à 80 % en poids, mélangées à un véhicule ou avec un enrobage. Les fibres obtenues de valeur calorique inférieure à 3 MegaJ/kg peuvent aussi être incorporées, à raison de 0,5 à 40 % en poids, à des aliments de valeur calorique supérieure à 4 MegaJ/kg en vue d'en diminuer la valeur calorique. Lorsque le produit alimentaire est humide, c'est-à-dire lorsque le produit alimentaire a une teneur en eau lors du début de sa préparation supérieure à 20 % en poids, on ajoute les fibres à raison de 5 à 40 %, tandis que pour un produit alimentaire sec, à teneur en eau inférieure à 20 % lors du début de sa préparation, on ajoute les fibres à raison de 0,5 à 5 %.

Parmi les produits alimentaires ainsi composés figurent du pain, des craquottes (biscottes très expansées produites par extrusion), des pâtes d'amande, de la compote, des condiments, des pâtes, des confitures et autres produits à base de fruits et de céréales, des produits de charcuterie et de boucherie, des produits laitiers, tels que les yaourts, des sauces, etc.

Les exemples suivants illustrent l'invention.

### Exemple 1

Des pulpes fraîches surpressées sont immergées dans l'éthanol à 95 %, jusqu'à recouvrement et dans l'heure qui suit leur sortie des presses. Il faut compter environ 1,5 litre d'éthanol par kg de pulpes humides. 44 kg de pulpes maintenues dans l'alcool sont ainsi stockées dans un réservoir. Un mois après, 15 kg de ces pulpes (1,95 kg sec) sont prélevés pour être broyés directement dans leur alcool de conservation. Le broyage est effectué durant 10 à 15 minutes à l'aide d'un broyeur à couteaux Alpino type PB 50-890, jusqu'à ce que l'on ait une farce fine. Le broyat ainsi obtenu (13,600 kg) est lavé sur Büchner par de l'éthanol à 95 %. Il est lavé en 4 fois ; environ 3,5 kg de broyat étant lavés par 6,5 litres d'éthanol. Le même alcool est passé plusieurs fois sur le büchner par petites quantités de 1,5 litre à chaque fois. Le lavage des pulpes est terminé lorsque le dernier alcool de lavage est incolore, celui-ci étant jusqu'alors jaune clair. Environ 2,5 kg de broyat lavé sont récupérés à chaque fois, il est séché durant une nuit à l'étuve à 60°C et durant 3 jours à 35°C. Les 9,5 kg de broyat lavé, donnent ainsi 1,9 kg de fibres séchées à 94 % de matière sèche (soit 1,8 kg sec). Elles sont passées sur plusieurs tamis, et se répartissent de la manière suivante selon les différentes granulométries :

> 42 % ont une granulométrie comprise entre 1 mm et 500 microns,
>
> 30,5 % ont une granulométrie comprise entre 500 microns et 315 microns,
>
> 18 % ont une granulométrie comprise entre 315 microns et 160 microns,
>
> 9,5 % ont une granulométrie inférieure à 160 microns.

Compte tenu du fait que le rendement en matière sèche équivaut à 90 %, et que la fraction de granulométrie, inférieure à 160 microns, représentant 9 % du matériel total a été éliminée, le rendement global de l'opération peut être estimé à 50 % environ.

Les tableaux suivants donnent les analyses et les propriétés des fibres obtenues.

TABLEAU I

| Echantillon | Fibres de betterave | | | | | | Pulpes initiales |
|---|---|---|---|---|---|---|---|
| | T1 | T2A | T2B | T3 | T4 | Tm | T |
| Granulométrie (μ) | 500 | 500-315 | 315-160 | 160-50 | <50 | - | - |
| Fraction pondérale (%) | 42,0 | 30,5 | 18,0 | 6,5 | 3,0 | 100 | - |
| Matière sèche (%) | 93,5 | 93,5 | 93,5 | 95,0 | 95,0 | 94,0 | 94,5 |
| Neutral detergent fiber (P1) | 57,0 | 56,5 | 55,5 | 49,0 | 21,0 | 54,5 | 36,0 |
| Acid detergent fiber (P2) | 25,0 | 25,0 | 25,0 | 24,0 | 9,5 | 24,5 | 24,0 |
| Cendres | 2,0 | 3,0 | 5,0 | 20,0 | 36,0 | 7,5 | 4,0 |
| Protéines (N x 5,7) | 8,5 | 8,0 | 7,5 | 7,0 | 6,5 | 7,5-8,0 | 8,0 |
| Acides uroniques | 23,5 | 23,5 | 23,5 | 22,0 | 13,5 | 23,0 | 21,0 |
| Cendres | 7,0 | 6,5 | 7,0 | 18,5 | 53,0 | 10,0 | 10,5 |
| Saccharose résiduel | 0,5 | 0,5 | 0,5 | 0,5 | 0,5 | 0,5 | 1,0 |
| Lignine (P3-P4) | 1,0 | 1,0 | 2,0 | 3,0 | 4,0 | 1,5-2,0 | 2,0 |
| Cellulose (P2-P3) | 26,0 | 27,0 | 26,5 | 22,0 | 8,5 | 25,5 | 24,5 |
| Hémicelluloses (P1-P2) | 32,0 | 31,5 | 30,5 | 25,0 | 11,5 | 30,0 | 32,0 |
| dont = | | | | | | | |
| Rhamnose+fucose | 2,1 | 1,9 | 1,9 | 1,5 | | 1,9 | 2,0 |
| Arabinose | 17,1 | 17,2 | 16,7 | 11,7 | | 16,5 | 16,3 |
| Xylose | 1,5 | 1,5 | 1,5 | 1,8 | | 1,5 | 1,6 |
| Mannose | 0,3 | 0,4 | 0,4 | 0,4 | | 0,4 | 0,3 |
| Galactose | 4,4 | 4,6 | 4,4 | 3,2 | | 4,4 | 4,2 |
| Glucose | 1,8 | 2,5 | 2,2 | 2,4 | | 2,1 | 2,0 |
| Total | 98,5 | 98,0 | 98,0 | 98,0 | 97,5 | 98,5 | 99,0 |

TABLEAU II

Masse volumique apparente et tassée.

| | T | T1 | T2A | T2B | T3 | T4 |
|---|---|---|---|---|---|---|
| Masse volumique apparente (mg/ml) | 496 | 175 | 160 | 132 | 144 | 144 |
| Masse volumique tassée (mg/ml) | 577 | 179 | 168 | 153 | 200 | 200 |

Les masses volumiques apparente et tassée d'une fibre du commerce "Fibrex" fournie par la Société Svenka Sockerfabriks AB à Lundavägen Malmoe Suède sont de 497 et 495 respectivement.

TABLEAU III

Capacité de rétention d'eau (g/g) des échantillons dans l'eau distillée (pH = 6,5 ; pH = 3,5) à 25°C.

| | T | T1 | T2A | T2B |
|---|---|---|---|---|
| pH = 6,5  25°C g/g | 20 | 26 | 29 | 27 |
| pH = 3,5  25°C g/g | 22 | 28 | 33 | 25 |

TABLEAU IV

Capacité de rétention d'eau (g/g) à 25°C des échantillons dans différentes solutions (eau courante, solutions de sels (NaCl et CaCl$_2$) à 1 % et 2 %, solutions de saccharose à 10 % et 20 %).

|  | T | T1 | T2A | T2B |
|---|---|---|---|---|
| Eau courante | 22 | 27 | 27 | 26 |
| NaCl 1 % | 22 | 28 | 25 | 24 |
| NaCl 2 % | 22 | 29 | 28 | 25 |
| CaCl$_2$ 1 % | 22 | 29 | 26 | 25 |
| CaCl$_2$ 2 % | 22 | 26 | 27 | 25 |
| Saccharose 10 % | 22 | 27 | 27 | 25 |
| Saccharose 20 % | 17 | 21 | 20 | 22 |

TABLEAU V

capacité de rétention d'eau (g/g) à 25°C, du son brut et des fibres de betteraves Fibrex dans les différents cas.

|  | Son brut (g/g) | Fibrex (g/g) |
|---|---|---|
| Eau distillée | 4,7 | 22 |
| Eau distillée pH 3,5 | 4,7 | 19 |
| Eau courante | 4,8 | 22 |
| NaCl 1 % | 4,7 | 15 |
| NaCl 2 % | 4,6 | 17 |
| CaCl2 1 % | 4,9 | 9 |
| Saccharose 10 % |  |  |
|    Valeur brute | 5,4 | 13 |
|    Valeur corrigée | 4,9 | 12 |
| Saccharose 20 % |  |  |
|    Valeur brute | 4,6 | 14 |
|    Valeur corrigée | 3,7 | 12 |

Il apparaît ainsi que, grâce au procédé suivant l'invention, on peut obtenir des fibres ayant des capacités de rétention d'eau dans une solution aqueuse de saccharose à 10 % ou de NaCl à 1 % supérieures à 10g/g et atteignant notamment des valeurs supérieures à 25.

On constate en outre que cette capacité de rétention d'eau se maintient en solution sucrée ou salée, ce qui est particulièrement avantageux pour une utilisation pratique en tant que fibre alimentaire.

EXEMPLE 2 (comparatif).

100 g de pulpes stockées depuis 15 jours à 4°C dans l'éthanol 95 % sont passées sur fritté G2 pour éliminer le maximum d'alcool de conservation. Ensuite, elles sont mises en suspension dans 350 ml d'eau distillée et broyées à l'aide d'un broyeur Polytron durant 15 à 20 minutes. La solution dans laquelle sont broyées les pulpes est éliminée sur fritté. Puis les pulpes sont lavées à l'eau distillée. Le lavage est terminé lorsque le filtrat, qui au départ est jaune noirâtre, devient pratiquement incolore. Le broyat lavé est alors séché à l'étuve à 35°C. Le produit ainsi obtenu est de couleur beige, et présente encore une odeur résiduelle de betterave. Ces deux caractéristiques sont gênantes, et rendent le produit de qualité insuffisante pour pouvoir être utilisé par la suite.

EXEMPLE 3

100 g de pulpes stockées depuis 15 jours à 4°C dans l'éthanol 95 % sont passées sur fritté G2 pour éliminer le maximum d'alcool de conservation. Ensuite, elles sont mises en suspension dans 350 ml de solution hydroalcoolique. Différents taux eau/éthanol 95 % sont testés : 75/25, 50/50, 25/75, 0/100. Les pulpes sont broyées dans ces différentes solutions à l'aide d'un Polytron durant 15 à 20 minutes. Puis, les solutions sont éliminées sur fritté G2. Les pulpes sont alors lavées par la même solution hydroalcoolique que celle dans laquelle elles ont été broyées. Le lavage est terminé lorsque le filtrat, initialement jaune, devient incolore. Les broyats lavés sont alors séchés à l'étuve à 35°C. Les produits ainsi obtenus sont de couleur beige, et ont encore une odeur de betterave tant que le taux d'alcool est inférieur à 75 %. Pour ce taux d'alcool de 75 %, et a fortiori de 100 %, les produits obtenus sont de qualité satisfaisante, à savoir relativement blancs et sans odeur.

EXEMPLE 4 (comparatif).

On reprend l'exemple 1, si ce n'est que l'on n'immerge pas les pulpes dans de l'éthanol, mais qu'on les abandonne d'abord à l'air libre pendant une semaine.

Les produits obtenus à la fin du procédé présentent une odeur résiduelle de betterave et sont de couleur beige.

EXEMPLE 5

On reprend l'exemple 1, si ce n'est que l'on effectue le lavage des pulpes par l'éthanol a 55°C. On obtient des fibres identiques à celles de l'exemple 1, mais plus blanches.

EXEMPLE 6

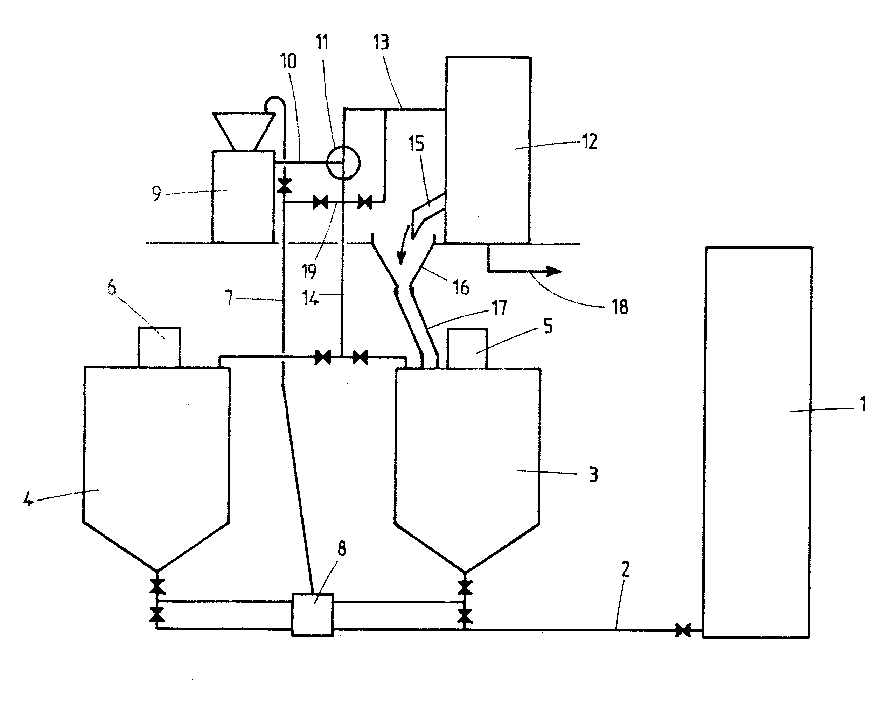

On met en oeuvre le procédé suivant l'invention dans l'installation-pilote représentée à la figure, en effectuant l'immersion et le broyage des pulpes en une seule étape.

L'installation comprend un réservoir 1 d'éthanol de qualité Rectifiée Extra Neutre (REN degré alcoolique supérieur ou égal à 95) qui ne contient ni pigments, ni goût, qui est limpide et incolore, qui ne contient pas dérivés sulfurés et qui n'a pas une teneur en eau supérieure à 10 % en poids. Du bas du réservoir 1, part un conduit 2 qui alimente par le bas deux cuves 3 et 4, munies d'un agitateur 5 et 6. Ces cuves 3 et 4 sont munies d'une double enveloppe permettant de les porter à une température comprise entre 45 et 55°C. Du bas des cuves 3 et 4, part un conduit 7 qui, par une pompe 8, permet de remonter le contenu des cuves dans un broyeur 9. Du sommet du broyeur part un conduit 10 qui, par une vanne à trois voies 11, permet d'alimenter soit un filtre 12 par un conduit 13, soit de recycler le produit dans les cuves 3 et 4 par un conduit 14.

L'installation est telle qu'il est possible de changer le broyeur 9. On peut monter un broyeur muni d'un couteau qui oblige la pulpe à passer à travers une plaque perforée dont on fait varier le diamètre des trous, au fur et à mesure de l'avancée du broyage, les plaques ayant des diamètres de trous de 10 mm, 6 mm et 3 mm, respectivement. Le broyeur 9 peut également être un broyeur à meule dont on modifie l'écartement au cours de l'avancée du broyage. Le broyeur à meule, utilisé en fin de broyage, permet de conserver au maximum la structure fibreuse du produit, ce qui se traduit par des propriétés de rétention d'eau et de masse volumique apparentes meilleures.

Comme filtre 12, on utilise un filtre à toile d'une ouverture de maille de 10 microns. La filtration est effectuée par un pompage sous vide de la phase éthanolique liquide. Ce filtre est muni d'une double enveloppe permettant d'obtenir des températures comprises entre 100 et 120°C et de procéder ainsi au séchage du produit par évaporation sous vide de la phase liquide. Grâce au système d'agitation à pales qui racle la surface de la toile filtrante, le produit, bien qu'il soit entouré d'une enveloppe à une température comprise entre 100 et 120°C, n'est pas porté à une température supérieure à 40 ou 50°C.

Du bas du filtre 12 part une goulotte 15 basculante permettant, au choix, de déverser le produit dans une trémie 16 menant, par un conduit 17, à l'une ou l'autre des cuves 3 et 4, soit de récupérer le produit fini. Du bas du filtre 12 part un conduit 18 pour l'alcool usé.

Le produit soutiré par la goulotte 15 est ensuite tamisé sur un tamis vibrant permettant de fractionner les granulométries, notamment supérieures à 315 microns, comprises entre 160 et 315 microns, comprises entre 80 et 160 microns, et inférieures à 80 microns.

L'installation-pilote fonctionne de la manière suivante :

Du réservoir 1, on fait passer, par le conduit 2, 900 litres d'éthanol dans la cuve 3, la cuve 4 restant vide. On porte la température de l'alcool contenu dans la cuve 3 à 50°C. Par la trémie 16 et le conduit 17, on déverse dans la cuve 3, 360 kg humides de pulpes fraîches surpressées (en matière sèche comprise entre 18 et 32 %) provenant du tamis de surpressage de la sucrerie. Ces 360 kg sont entièrement immergés dans l'éthanol et maintenus en agitation. L'opération de déversement et de mise en température dure 5 minutes.

Ensuite, on pompe, par la pompe 8 et en passant par le conduit 7, la suspension éthanolique pour l'envoyer dans le broyeur 9 muni d'une plaque ayant un diamètre de trous de 10 mm. Le débit est de 10 $m^3$/ heure. Par les conduits 10 et 14, la vanne 11 étant manoeuvrée en conséquence, on recycle la suspension dans la cuve 3. On change la grille du broyeur 9 pour la remplacer par une plaque ayant un diamètre des trous de 6 mm.

On renouvelle les opérations décrites précédemment. On remplace la plaque du broyeur 9 par une plaque de diamètre de 3 mm. On reprend les opérations précédentes.

On a donc maintenant dans la cuve 3 une suspension éthanolique de pulpes ayant subi trois broyages.

On remplit la cuve 4 de 500 litres d'éthanol à partir du réservoir 1, en passant par le conduit 2. On porte ces 500 litres à la température de 50°C.

Du bas de la cuve 3, on soutire la suspension éthanolique que l'on envoie, par l'intermédiaire du conduit 7 et de la pompe 8, par un conduit 19 au filtre sécheur 12. Après filtration, l'alcool usé est évacué par le conduit 18, tandis que les pulpes filtrées sont déversées par la goulotte 15, la trémie 16 et le conduit 17 qui est maintenant branché sur la cuve 4, dans la cuve 4.

Parallèlement, on a transformé le broyeur 9 en un broyeur à meule. De la cuve 4 on envoie la suspension éthanolique par la pompe 8 et le conduit 7 dans le broyeur 9. De celle-ci, la suspension éthanolique broyée passe par les conduits 10 et 13 au filtre 12. Après filtration, on procède au séchage à 50°C et sous vide. Par la goulotte 15, on sort la fibre séchée que l'on envoie sur le tamis vibrant.

<div align="center">EXEMPLE 7</div>

On découpe des carottes en rondelles de 1 cm de hauteur environ que l'on plonge immédiatement dans de l'éthanol rectifié extra neutre à 95 %. On suit ensuite le processus de l'exemple 1. On obtient les résultats consignés aux tableaux VI et VII.

25

TABLEAU VI

Composition chimique des fibres de carotte

| Echantillon | Fibres de carotte | | | |
|---|---|---|---|---|
| | T 1 | T 2 | T 3 | T m |
| Granulométrie (μ) | >315 | 315-160 | 160-40 | - |
| Matière sèche (%) | 90,5 | 90,7 | 90,5 | 90,6 |
| *Cellulose | 18,6 | 22,4 | 16,1 | 19,0 |
| *Hémicelluloses | 7,8 | 10,4 | 16,1 | 11,4 |
| *Pectines | 33,3 | 30,8 | 28,5 | 30,9 |
| *Protéines | 5,4 | 4,6 | 4,3 | 4,8 |
| *Cendres | 4,5 | 5,5 | 6,3 | 5,4 |
| *Lignine | 0,6 | 1,0 | 1,6 | 1,1 |
| *Acides galacturoniques | 34,7 | 34,5 | 28,0 | 32,4 |
| *Oses neutres | 43,4 | 53,4 | 49,3 | 48,7 |
| Rhamnose | 0,75 | 1,1 | 1,0 | 0,95 |
| Arabinose | 7,3 | 8,4 | 8,7 | 8,1 |
| Xylose | 2,4 | 2,7 | 4,1 | 3,1 |
| Mannose | 2,1 | 2,5 | 2,2 | 2,3 |
| Galactose | 9,3 | 11,0 | 9,0 | 9,8 |
| Glucose | 21,6 | 27,7 | 24,3 | 24,5 |
| *Total acides galacturoniques + oses neutres | 78,1 | 87,9 | 77,3 | 81,1 |
| *en % de la matière sèche. | | | | |

TABLEAU VII

Capacité de rétention d'eau (g/g)
des fibres de carottes dans différentes solutions

|  | T 1 | T 2 | T 3 | T m |
|---|---|---|---|---|
| Eau courante | 34,7 | 36,6 | 27,1 | 32,8 |
| Eau distillée (pH 3,5) | 32,9 | 37,7 | 30,1 | 33,6 |
| NaCl    1 % | 33,1 | 33,6 | 26,1 | 30,9 |
| NaCl    2 % | 31,9 | 33,9 | 28,4 | 31,4 |
| CaCl$_2$   1 % | 20,4 | 23,6 | 21,1 | 21,7 |
| CaCl$_2$   2 % | 25,2 | 26,1 | 23,2 | 24,8 |
| Saccharose    10 % | 30,3 | 37,7 | 33,4 | 33,8 |
| Saccharose    20 % | 28,1 | 32,5 | 30,1 | 30,2 |

On constate que les capacités de rétention d'eau des fibres de carotte sont encore meilleures que celles des fibres de betterave. La teneur totale en fibres étant même supérieure à celle que l'on obtient à partir de betteraves.

EXEMPLE 8

On reprend l'exemple 7, si ce n'est que l'on part de résidus d'extraction d'arômes de carottes. On obtient des résultats semblables à ceux de l'exemple 7.

EXEMPLE 9

On reprend l'exemple 1 en traitant, cette fois, des résidus d'extraction d'arômes d'oignons.

On obtient les résultats rassemblés aux tableaux VIII et IX.

Les capacités de rétention d'eau des fibres d'oignons atteignent 40 g d'eau par gramme de produit sec, ce qui est un taux considérable.

### TABLEAU VIII

#### Composition chimique des fibres d'oignons

| Echantillon | Fibres d'oignons |
|---|---|
| Granulométrie (µ) | 600-40 |
| Matière sèche (%) | 87,7 |
| Cellulose brute | 18,3 |
| Pectines | 5,0 |
| Protéines | 10,0 |
| Cendres | 4,2 |
| Lignine | 2,2 |

### TABLEAU IX

#### Capacité de rétention d'eau
#### des fibres d'oignons (en g/g)

| | |
|---|---|
| Eau courante | 40,0 |
| Eau distillée (pH 3,5) | 38,7 |

### Exemple 10

On mélange à sec 230g de farine et 2,50g de fibres alimentaires telles que préparées à l'exemple 1, ainsi que du sel et de la levure. On ajoute de l'eau pour obtenir une pâte homogène. On laisse reposer pendant vingt minutes. On pétrit la pâte pendant cinq minutes. On la laisse gonfler pendant quinze minutes. On humidifie la surface de la pâte et on la met au four à 750° C pendant quarante minutes.

On obtient ainsi un pain aux fibres.

## Exemple 11

On hache 40g de viande. On mélange la viande hachée à 20g de graisse, à 20g d'un mélange d'oeuf et de lait, à 2g de fibres alimentaires telles que préparées à l'exemple 7 et on fait cuire au bain-marie pendant une heure. On obtient ainsi un pâté aux fibres.

REVENDICATIONS

1. Procédé de préparation de fibres alimentaires à partir de parties comestibles de végétaux, qui consiste à traiter les parties comestibles de végétaux à l'éthanol à au moins 75 %, caractérisé en ce qu'il consiste à immerger les parties comestibles des végétaux dans de l'éthanol à au moins 75 % immédiatement après qu'elles ont été mises en un état les rendant sensibles aux phénomènes de dégradation enzymatiques, puis, immédiatement ou non, à les broyer en milieu éthanolique à au moins 75 % jusqu'à obtention de fibres ayant une granulométrie comprise entre 1 mm et 50 microns, puis à laver les fibres par de l'éthanol à au moins 75 % jusqu'à ce que le filtrat soit incolore, puis à sécher les fibres lavées.

2. Procédé suivant la revendication 1, caractérisé en ce qu'il consiste à immerger les parties comestibles des végétaux dans de l'éthanol moins de 4 heures après qu'elles ont été mises à l'état sensible.

3. Procédé suivant la revendication 1 ou 2, caractérisé en ce qu'il consiste à immerger les parties comestibles des végétaux dans de l'éthanol à raison de 1,2 à 1,8 litre d'éthanol par kg de parties comestibles des végétaux.

4. Procédé suivant l'une des revendications précédentes, caractérisé en ce qu'il consiste à broyer les parties comestibles des végétaux à une granulométrie inférieure à 500 microns environ.

5. Procédé suivant l'une des revendications précédentes, caractérisé en ce qu'il consiste à immerger les parties comestibles des végétaux et à les laver dans de l'éthanol ayant une température de préférence supérieure à 50°C.

6. Procédé suivant l'une des revendications 1 à 5, caractérisé en ce que la partie comestible des végétaux est de la pulpe de betterave après surpressage.

7. Procédé suivant l'une des revendications 1 à 5, caractérisé en ce que la partie comestible des végétaux est de la carotte ou de l'oignon fragmenté.

8. Fibre alimentaire, caractérisée en ce qu'elle est préparée par un procédé suivant l'une des revendications précédentes.

9. Fibre alimentaire suivant la revendication 8, caractérisée en ce qu'elle a une granulométrie inférieure à 500 microns et de préférence supérieure à 315 microns.

10. Fibre alimentaire suivant la revendication 8 ou 9, caractérisée par une capacité de rétention d'eau dans une solution aqueuse de saccharose à 10 % supérieure à 20 g d'eau par gramme.

11. Fibre alimentaire suivant la revendication 8, 9 ou 10, caractérisée par une capacité de rétention d'eau dans une solution aqueuse de NaCl à 1 % supérieure à 20 g d'eau par gramme.

12. Fibre alimentaire, ayant des teneurs pondérales en hémicelluloses comprises entre 25 et 33 %, en cellulose comprises entre 20 et 27 %, en acides uroniques comprises entre 20 et 25 %, en protéines comprises entre 7 et 12 %, en lignine comprises entre 1 et 6 % et en matières minérales inférieures ou égales à 7,5 %, le solde étant constitué par des impuretés de lavage, caractérisée par une teneur en saccharose inférieure ou égale à 0,5 %, par une granulométrie inférieure à 500 microns, et par une capacité de rétention d'eau en solution aqueuse de NaCl à 1 % supérieure à 20 g/g et par une capacité de rétention d'eau en solution aqueuse de saccharose à 10 % supérieure à 20 g/g.

13. Fibre alimentaire, ayant des teneurs pondérales en hémicelluloses comprises entre 16 et 8 %, en cellulose comprises entre 23 et 16 %, en acides uroniques comprises entre 28 et 35 %, en protéines comprises entre 5,5 et 4 %, en lignine comprises entre 0,5 et 2 % et en matières minérales inférieures ou égales à 6,5 %, le solde étant constitué par des impuretés de lavage, caractérisée par une granulométrie inférieure à 500 microns, et par une capacité de rétention d'eau en solution aqueuse de NaCl à 1 % supérieure à 25 g/g et par une capacité de rétention d'eau en solution aqueuse de saccharose à 10 % supérieure à 30 g/g.

14. Fibre alimentaire, ayant des teneurs pondérales en cellulose comprises entre 17 et 22 %, en acides uroniques comprises entre 7 et 4 %, en protéines comprises entre 8 et 11 %, en lignine comprises entre 1,5 et 2,5 % et en matières minérales inférieures ou égales à 4,5 %, le solde étant constitué par des impuretés de lavage, caractérisée par une granulométrie inférieure à 500 microns, et par une capacité de rétention d'eau en solution aqueuse de NaCl à 1 % supérieure à 20 g/g et par une capacité de rétention d'eau supérieure à 35 g/g.

15. Produit alimentaire, caractérisé en ce qu'il comprend de 0,5 à 40 % en poids de fibres suivant l'une des revendications 12, 13 ou 14 et de 95,5 à 60 % en poids d'un aliment ayant une valeur calorique supérieure à 4 MegaJ/kg.

REVENDICATIONS

1. Procédé de préparation de fibres alimentaires à partir de parties comestibles de végétaux, qui consiste à traiter les parties comestibles de végétaux à l'éthanol à au moins 75 %, caractérisé en ce qu'il consiste à immerger les parties comestibles des végétaux dans de l'éthanol à au moins 75 % immédiatement après qu'elles ont été mises en un état les rendant sensibles aux phénomènes de dégradation enzymatiques, puis, immédiatement ou non, à les broyer en milieu éthanolique à au moins 75 % jusqu'à obtention de fibres ayant une granulométrie comprise entre 1 mm et 50 microns, puis à laver les fibres par de l'éthanol à au moins 75 % jusqu'à ce que le filtrat soit incolore, puis à sécher les fibres lavées.

2. Procédé suivant la revendication 1, caractérisé en ce qu'il consiste à immerger les parties comestibles des végétaux dans de l'éthanol moins de 4 heures après qu'elles ont été mises à l'état sensible.

3. Procédé suivant la revendication 1 ou 2, caractérisé en ce qu'il consiste à immerger les parties comestibles des végétaux dans de l'éthanol à raison de 1,2 à 1,8 litre d'éthanol par kg de parties comestibles des végétaux.

4. Procédé suivant l'une des revendications précédentes, caractérisé en ce qu'il consiste à broyer les parties comestibles des végétaux à une granulométrie inférieure à 500 microns environ.

5. Procédé suivant l'une des revendications précédentes, caractérisé en ce qu'il consiste à immerger les parties comestibles des végétaux et à les laver dans de l'éthanol ayant une température de préférence supérieure à 50° C.

6. Procédé suivant l'une des revendications 1 à 5, caractérisé en ce que la partie comestible des végétaux est de la pulpe de betterave après surpressage.

7. Procédé suivant l'une des revendications 1 à 5, caractérisé en ce que la partie comestible des végétaux est de la carotte ou de l'oignon fragmenté.

8. Procédé de préparation d'un produit alimentaire, caractérisé en ce qu'il consiste à associer de 0,5 à 40 % en poids de fibres préparées suivant l'une des revendications 1 à 7 et de 95,5 à 60 % en poids d'un aliment ayant une valeur calorique supérieure à 4 MegaJ/kg.

9. Procédé suivant la revendication 8, caractérisé en ce que les fibres ont une granulométrie inférieure à 500 microns et de préférence supérieure à 315 microns.

10. Procédé suivant la revendication 8 ou 9, caractérisé en ce que les fibres ont une capacité de rétention d'eau dans une solution aqueuse de saccharose à 10 % supérieure à 20 g d'eau par gramme.

11. Procédé suivant la revendication 8, 9 ou 10, caractérisé en ce que les fibres ont une capacité de rétention d'eau dans une solution aqueuse de NaCl à 1 % supérieure à 20 g d'eau par gramme.

12. Procédé suivant la revendication 8, 9, 10 ou 11, caractérisé en ce que les fibres ont des teneurs pondérales en hémicelluloses comprises entre 25 et 33 %, en cellulose comprises entre 20 et 27 %, en acides uroniques comprises entre 20 et 25 %, en protéines comprises entre 7 et 12 %, en lignine comprises entre 1 et 6 % et en matières minérales inférieures ou égales à 7,5 %, le solde étant constitué par des impuretés de lavage, caractérisée par une teneur en saccharose inférieure ou égale à 0,5 %, par une granulométrie inférieure à 500 microns, et par une capacité de rétention d'eau en solution aqueuse de NaCl à 1 % supérieure à 20 g/g et par une capacité de rétention d'eau en solution aqueuse de saccharose à 10 % supérieure à 20 g/g.

13. Procédé suivant les revendications 8, 9, 10 ou 11, caractérisé en ce que les fibres ont des teneurs pondérales en hémicelluloses comprises entre 16 et 8 %, en cellulose comprises entre 23 et 16 %, en acides uroniques comprises entre 28 et 35 %, en protéines comprises entre 5,5 et 4 %, en lignine comprises entre 0,5 et 2 % et en matières minérales inférieures ou égales à 6,5 %, le solde étant constitué par des impuretés de lavage, caractérisée par une granulométrie inférieure à 500 microns, et par une capacité de rétention d'eau en solution aqueuse de NaCl à 1 % supérieure à 25 g/g et par une capacité de rétention d'eau en solution aqueuse de saccharose à 10 % supérieure à 30 g/g.

14. Procédé suivant les revendications 8, 9, 10 ou 11, caractérisé en ce que les fibres ont des teneurs pondérales en cellulose comprises entre 17 et 22 %, en acides uroniques comprises entre 7 et 4 %, en protéines comprises entre 8 et 11 %, en lignine comprises entre 1,5 et 2,5 % et en matières minérales inférieures ou égales à 4,5 %, le solde étant constitué par des impuretés de lavage, caractérisée par une granulométrie inférieure à 500 microns, et par une capacité de rétention d'eau en solution aqueuse de NaCl à 1 % supérieure à 20 g/g et par une capacité de rétention d'eau supérieure à 35 g/g.

15. L'utilisation de fibres susceptibles d'être

4                    0223703

préparées par un procédé suivant l'une des revendications
1 à 8 pour la préparation d'un produit alimentaire à faible valeur calorique.

REVENDICATIONS

1. Procédé de préparation de fibres alimentaires à partir de parties comestibles de végétaux, qui consiste à traiter les parties comestibles de végétaux à l'éthanol à au moins 75 %, caractérisé en ce qu'il consiste à immerger les parties comestibles des végétaux dans de l'éthanol à au moins 75 % immédiatement après qu'elles ont été mises en un état les rendant sensibles aux phénomènes de dégradation enzymatiques, puis, immédiatement ou non, à les broyer en milieu éthanolique à au moins 75 % jusqu'à obtention de fibres ayant une granulométrie comprise entre 1 mm et 50 microns, puis à laver les fibres par de l'éthanol à au moins 75 % jusqu'à ce que le filtrat soit incolore, puis à sécher les fibres lavées.

2. Procédé suivant la revendication 1, caractérisé en ce qu'il consiste à immerger les parties comestibles des végétaux dans de l'éthanol moins de 4 heures après qu'elles ont été mises à l'état sensible.

3. Procédé suivant la revendication 1 ou 2, caractérisé en ce qu'il consiste à immerger les parties comestibles des végétaux dans de l'éthanol à raison de 1,2 à 1,8 litre d'éthanol par kg de parties comestibles des végétaux.

4. Procédé suivant l'une des revendications précédentes, caractérisé en ce qu'il consiste à broyer les parties comestibles des végétaux à une granulométrie inférieure à 500 microns environ.

5. Procédé suivant l'une des revendications précédentes, caractérisé en ce qu'il consiste à immerger les parties comestibles des végétaux et à les laver dans de l'éthanol ayant une température de préférence supérieure à 50° C.

6. Procédé suivant l'une des revendications 1 à 5, caractérisé en ce que la partie comestible des végétaux est de la pulpe de betterave après surpressage.

7. Procédé suivant l'une des revendications 1 à 5, caractérisé en ce que la partie comestible des végétaux est de la carotte ou de l'oignon fragmenté.

8. Procédé de préparation d'un produit alimentaire, caractérisé en ce qu'il consiste à associer de 0,5 à 40 % en poids de fibres préparées suivant l'une des revendications 1 à 7 et de 95,5 à 60 % en poids d'un aliment ayant une valeur calorique supérieure à 4 MegaJ/kg.

9. Procédé suivant la revendication 8, caractérisé en ce que les fibres ont une granulométrie inférieure à 500 microns et de préférence supérieure à 315 microns.

10. Procédé suivant la revendication 8 ou 9, caractérisé en ce que les fibres ont une capacité de rétention d'eau dans une solution aqueuse de saccharose à 10 % supérieure à 20 g d'eau par gramme.

11. Procédé suivant la revendication 8, 9 ou 10, caractérisé en ce que les fibres ont une capacité de rétention d'eau dans une solution aqueuse de NaCl à 1 % supérieure à 20 g d'eau par gramme.

12. Procédé suivant la revendication 8, 9, 10 ou 11, caractérisé en ce que les fibres ont des teneurs pondérales en hémicelluloses comprises entre 25 et 33 %, en cellulose comprises entre 20 et 27 %, en acides uroniques comprises entre 20 et 25 %, en protéines comprises entre 7 et 12 %, en lignine comprises entre 1 et 6 % et en matières minérales inférieures ou égales à 7,5 %, le solde étant constitué par des impuretés de lavage, caractérisée par une teneur en saccharose inférieure ou égale à 0,5 %, par une granulométrie inférieure à 500 microns, et par une capacité de rétention d'eau en solution aqueuse de NaCl à 1 % supérieure à 20 g/g et par une capacité de rétention d'eau en solution aqueuse de saccharose à 10 % supérieure à 20 g/g.

13. Procédé suivant les revendications 8, 9, 10 ou 11, caractérisé en ce que les fibres ont des teneurs pondérales en hémicelluloses comprises entre 16 et 8 %, en cellulose comprises entre 23 et 16 %, en acides uroniques comprises entre 28 et 35 %, en protéines comprises entre 5,5 et 4 %, en lignine comprises entre 0,5 et 2 % et en matières minérales inférieures ou égales à 6,5 %, le solde étant constitué par des impuretés de lavage, caractérisée par une granulométrie inférieure à 500 microns, et par une capacité de rétention d'eau en solution aqueuse de NaCl à 1 % supérieure à 25 g/g et par une capacité de rétention d'eau en solution aqueuse de saccharose à 10 % supérieure à 30 g/g.

14. Procédé suivant les revendications 8, 9, 10 ou 11, caractérisé en ce que les fibres ont des teneurs pondérales en cellulose comprises entre 17 et 22 %, en acides uroniques comprises entre 7 et 4 %, en protéines comprises entre 8 et 11 %, en lignine comprises entre 1,5 et 2,5 % et en matières minérales inférieures ou égales à 4,5 %, le solde étant constitué par des impuretés de lavage, caractérisée par une granulométrie inférieure à 500 microns, et par une capacité de rétention d'eau en solution aqueuse de NaCl à 1 % supérieure à 20 g/g et par une capacité de rétention d'eau supérieure à 35 g/g.

15. L'utilisation de fibres susceptibles d'être

4                0223703

préparées par un procédé suivant l'une des revendications
1 à 8 pour la préparation d'un produit alimentaire à faible valeur calorique.